# Europäisches Patentamt
# European Patent Office
# Office européen des brevets

(19)

(11) Publication number: **0 012 528**
**B1**

(12)
# EUROPEAN PATENT SPECIFICATION

(45) Date of publication of patent specification: **14.03.84**

(51) Int. Cl.³: **G 05 B  19/18**

(21) Application number: **79302647.7**

(22) Date of filing: **20.11.79**

(54) Method and apparatus for detecting tool breakage, for example in a numerically-controlled machine tool.

(30) Priority: **21.11.78 JP  143617/78**

(43) Date of publication of application:
**25.06.80 Bulletin 80/13**

(45) Publication of the grant of the patent:
**14.03.84 Bulletin 84/11**

(84) Designated Contracting States:
**DE FR GB**

(56) References cited:
**FR - A - 2 257 956**
**US - A - 3 836 834**
**US - A - 4 087 801**

(73) Proprietor: **FANUC LTD**
**5-1, Asahigaoka 3-chome Hino-shi**
**Tokyo 191 (JP)**

(72) Inventor: **Sata, Toshio**
**9-11 Shimohoya 3-chome**
**Hoya-shi, Tokyo (JP)**
Inventor: **Matsushima, Katsumori**
**No. 1-17-9-302 Kakinokizaka**
**Meguro-ku Tokyo (JP)**

(74) Representative: **Bedggood, Guy Stuart et al,**
**Haseltine Lake & Co. Hazlitt House 28**
**Southampton Buildings Chancery Lane**
**London WC2A 1AT (GB)**

## Method and apparatus for detecting tool breakage, for example in a numerically-controlled machine tool

The present invention relates to a method and apparatus for detecting tool breakage, for example in a numerically-controlled machine tool.

In an automatically-controlled machine tool such as a numerical-controlled machine, if machining is continued after the tool being used has broken down for some reason in the course of machining, a workpiece being machined will be defective and, in addition, there is a possibility of further serious problems arising such as breakdown of the machine tool itself in the worst case. To avoid such problems, it is desired to detect breakdown of a tool in use, but no satisfactory means has previously been developed for detecting the breakdown of a tool in use with sufficient accuracy.

French Patent Specification No. 2,257,956 discloses a method of controlling a machine tool in which actual cutting resistance encountered is sampled with a frequency corresponding to the firing frequency of thyristors controlling supply of power to a driving motor, and sampled values of actual cutting resistance are compared to values previously stored in a memory and corresponding to normal machining conditions. The results of the comparison are employed to control the machine tool.

United States Patent Specification No. 4,087,801 discloses a detector for use with a machine tool. The detector produces an output corresponding to the vibration of a cutting tool or a workpiece worked by the cutting tool. A signal processing circuit processes the output from the detector. The processed detector output from the signal processing circuit is compared with a data signal representing a processed detector output as it should be under normal cutting conditions. If the comparison reveals that the processed detector output corresponds to abnormal vibration is terminated. In particular, if the detector output increases abruptly, indicating abnormal vibration, the machining operation is terminated.

United States Patent Specification No. 3,836,834 discloses a protection system for a numerically controlled machining device. The system consists of a strain-gauge-instrumented tool holder or tool holder support, and circuitry for amplifying, filtering and comparing. The instrumented tool holder detects cutting and side forces by means of the strain gauges. The system initiates shut-down of machining operations whenever an instantaneous force exceeds a preselected maximum, or an average force suddenly changes its level by a preselected factor.

In each of the systems disclosed in French Patent Specification No. 2,257,956 and United States Patent Specifications Nos. 4,087,801 and 3,836,834, comparison is effected between the value of a parameter encountered during actual machining and a prestored or preselected value of the parameter corresponding to normal machining conditions.

In particular (see for example United States Patent Specifications Nos. 4,087,801 and 3,836,834) if the value of the parameter during actual machining simply increases beyond the prestored or preselected value of the parameter this is recognised and employed to cause termination of machining operations.

In such a system as might be applied for the detection of tool breakage, an increase in cutting resistance beyond a prestored or preselected "normal" value of cutting resistance (which prestored or preselected value indicates a normal cutting resistance) would be taken to indicate occurrence of tool breakage.

However, in such a system, the occurrence of noise in a cutting resistance detection signal, superimposed on a true cutting resistance detection signal value, will result in an indication that tool breakage has occurred despite the fact that cutting is proceding normally. Such false indications of tool breakage detract from the reliability of the system.

If such a preselected value of a parameter as is mentioned above is taken to be a standard cutting resistance change pattern representing a cutting resistance change pattern occurring in the event of tool breakdown, and the value of the parameter during actual machining represents cutting resistance, the prior art provides for storing of the preselected value of the parameter, as the standard cutting resistance change pattern, detecting the value of the parameter during actual machining, forming a cutting resistance change pattern occurring in the course of machining, and comparing the standard cutting resistance change pattern with the cutting resistance change pattern occurring in the course of machining, coincidence of the compared patterns (i.e. compared parameter values) indicating occurrence of tool breakdown.

The present invention provides a method of detecting breakdown of a tool, and apparatus for detecting breakdown of a tool, which can provide enhanced reliability of detection of tool breakage by the avoidance of such false indications of tool breakage.

The inventors of the present invention have realised that in the event of tool breakdown or breakage, cutting resistance does not simply increase beyond a "normal" cutting resistance value.

The inventors of the present invention have realised that in the event of tool breakdown, cutting resistance changes in accordance with a pattern which is characteristic of tool breakdown.

The inventors of the present invention have determined the form of this characteristic pattern of cutting resistance change which occurs in the event of tool breakdown, and have further provided that by storing data indicative of this characteristic pattern and comparing the stored characteristic pattern with a signal representing the ever-changing pattern of cutting resistance during actual machining, tool breakdown can be detected reliably.

There is substantially no possibility that the signal representing cutting resistance change pattern will coincide with the pattern characteristic of tool breakdown (except, of course, when tool breakdown actually occurs) even in the presence of noise.

According to one aspect of the present invention (Claim 1) there is provided a method for detecting breakdown of a tool in the course of machining of a workpiece by the tool, comprising:

storing, as a standard cutting resistance change pattern, a representation of a cutting resistance change pattern occurring in the event of tool breakdown;

detecting, in the course of machining, the cutting resistance met by the tool;

forming, from the detected cutting resistance, a representation of a cutting resistance change pattern occurring in the course of machining; and

comparing the standard cutting resistance change pattern with the cutting resistance change pattern occurring in the course of machining;

coincidence of compared patterns indicating the occurrence of tool breakdown,

characterised in that said cutting resistance change pattern in the event of tool breakdown comprises first a decrease in the cutting resistance, which is greater, in absolute value, than a predetermined set value $\sigma$ immediately followed by an abrupt increase in the cutting resistance, which is greater, in absolute value, than a predetermined multiple of said predetermined set value $\sigma$.

According to another aspect of the present invention (Claim 7), there is provided apparatus for detecting breakdown of a tool in the course of machining of a workpiece by the tool, comprising:

a memory for storing, as a standard cutting resistance change pattern, a representation of a cutting resistance change pattern occurring in the event of tool breakdown;

detector means arranged for detecting in the course of machining, the cutting resistance met by the tool;

means for forming, from the detected cutting resistance, a representation of a cutting resistance change pattern occurring in the course of machining;

comparator means arranged for comparing the standard cutting resistance change pattern with the cutting resistance change pattern occurring in the course of machining;

means detecting coincidence of compared patterns and indicating thereby the occurrence of tool breakdown,

characterised in that said resistance change pattern in the event of tool breakdown comprises first a decrease, which is greater, in absolute value, than a predetermined set value $\sigma$, immediately followed by an abrupt increase in the cutting resistance, which is greater, in absolute value, than a predetermined multiple of said predetermined set value $\sigma$.

More specifically, this invention can provide rapid, automatic detection of tool breakdown during working through utilisation of a tool cutting resistance change pattern and thereby can prevent problems which could otherwise result from tool breakdown.

Briefly stated, in embodiments of this invention, a tool cutting resistance change pattern which would be produced by breakdown of the tool is prestored as a standard change pattern in a memory, an actual cutting resistance change patterns occurring during working are compared with the prestored standard change pattern to detect occurrence of tool breaksown by coincidence of actual and stored patterns.

Reference will now be made, by way of example, to the accompanying drawings, in which:—

Figure 1 is a schematic diagram illustrating a tool and a workpiece,

Figure 2 is a graph illustrating change of cutting resistance with time as the tool of Figure 1 machines the workpiece of Figure 1,

Figure 3 is another schematic diagram illustrating a tool and a workpiece,

Figure 4 is a graph illustrating change of cutting resistance with time in the event of tool breakage as the tool of Figure 3 machines the workpiece of Figure 3,

Figure 5 is a more detailed graph illustrating an exemplary cutting resistance change pattern for assistance in explanation of this invention, and

Figure 6 is a schematic block diagram illustrating apparatus embodying this invention.

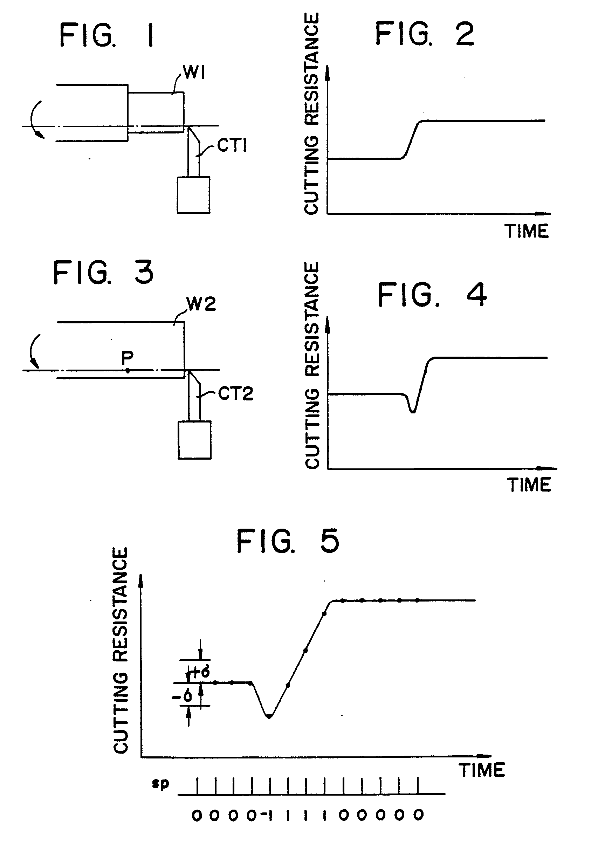

Figure 1 shows a case in which a workpiece W1 having a stepped portion, driven in the direction of an arrow shown in the Figure, is cut by a tool CT1 along a chain line shown in the Figure, and the graph of Figure 2 illustrates the change in cutting resistance with time as the cutting takes place. Figure 3 shows a case in which a columnar workpiece W2 driven in the direction of an arrow shown in the Figure is cut by a tool CT2 along a chain line shown in the Figure, with tool breakage occurring at a point P, and the graph of Figure 4 illustrates the change in cutting resistance with time in the case of Figure 3.

In the case of Figure 1, in which no failure occurs in the tool CT1 in the course of cutting, even though the workpiece W1 has a stepped portion as shown, the change in the cutting resistance with time merely presents a characteristic such as shown in Figure 2 in which cutting resistance abruptly increases when the tool CT1 reaches the stepped portion of the workpiece W1 but thereafter remains constant.

In the case in which the tool CT2 breaks down during cutting, as shown in Figure 3, change in cutting resistance presents, for example, a temporary characteristic such as is shown in Figure 4 in which cutting resistance decreases temporarily at the moment of the tool breakage but thereafter sharply increases. The reason for the occurrence of such a characteristic is that in the case of a tool breakage, cutting resistance decreases temporarily due to cracking or breaking of the tool tip or the like, and is then abruptly increased due to feed of the tool having no cutting ability.

The present invention makes use of such a peculiar cutting resistance change pattern occurring in the case of a tool breakdown and is intended to detect the tool breakdown by successively comparing a prestored standard cutting resistance change pattern, corresponding to a case in which tool breakdown occurs, with actual cutting resistance change patterns occurring during working.

A description will now be given of a method for comparing the prestored standard cutting resistance change pattern corresponding to a case in which tool breakdown occurs with the actual cutting resistance change patterns occurring during working.

For example, as shown in the graph of Figure 5, during working cutting resistance is detected at all times and the detected cutting resistance values are read by means of sampling pulses sp having a period as shown in Figure 5 and the difference between each sampled value of cutting resistance and the immediately preceding sampled value is obtained. Next, the relationship of the signed magnitudes of the thus obtained differences to a preset value $\sigma$ is determined in accordance with the relationship specified by the following equations and the results are specified in terms of three values, 0, +1 and −1.

$$-\sigma \leqq \text{(current sampled value)}$$
$$- \text{(preceding sampled value)} \leqq \sigma \rightarrow 0 \quad (1)$$

$$\text{(current sampled value)}$$
$$- \text{(preceding sampled value)} > \sigma \rightarrow 1 \quad (2)$$

$$\text{(current sampled value)}$$
$$- \text{(preceding sampled value)} < -\sigma \rightarrow -1 \quad (3)$$

The value of $\sigma$ is determined with consideration of variations in cutting resistance which occur during normal cutting work.

Assuming that a value of $\sigma$ such, for example, as shown in Figure 5 is employed in calculation of the relationship specified by the above equations, when actual cutting resistance changes as shown in the graph of Figure 5 the change pattern of Figure 5 is represented by a sequence of numbers, each number taking one of the three values 0, +1, −1, as shown at the bottom of Figure 5 below the time axis; in this case, the progressions of numbers (−1, 1, 1, 1) indicates occurrence of a tool breakdown.

A plurality of standard cutting resistance change patterns, which are assumed to occur in the event of a tool breakdown, are converted into progressions of the abovesaid ternary composition, that is, progressions made up of numbers each taking one of the three values 0, +1, −1, for example (−1, 1, 1, 1), (−1, 0, 1, 1), (−1, 1, 1, 0), etc., which are prestored in a memory. By comparing these prestored progressions with progressions of numbers obtained in the course of actual working and finding coincidence of stored and actual working progressions, it is determined that the tool has broken down.

In the above-described example, the cutting resistance change patterns are compared using progressions of four numbers, but the number of numbers in the compared progressions may be selected as desired and the standard cutting resistance change patterns assumed to appear in the case of a breakdown of tool are not limited specifically to the aforementioned patterns.

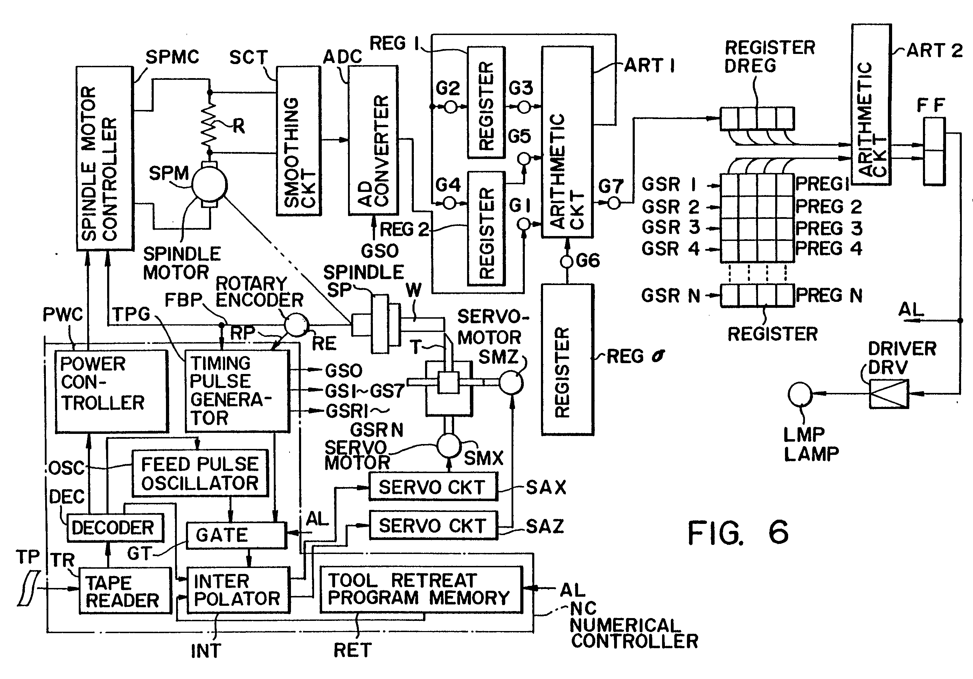

Figure 6 illustrates in block form apparatus embodying the present invention based on the principles described above as being applied to a numerical-controlled machine. The apparatus of Figure 6 includes a numerical controller NC; a command tape TP; a tape reader TR; a decoder DEC; a feed pulse oscillator OSC; an interpolator INT; a power controller PWC; a timing pulse generator TPG; a tool retreat program memory RET; servo circuits SAX and SAZ; servomotors SMX and SMZ; a tool T; a workpiece W; a spindle SP; a spindle motor controller SPMC; a spindle motor SPM; a resistor R; a rotary encoder RE; a smoothing circuit SCT; an A—D converter ADC; arithmetic circuits ART1 and ART2; registers REG1, REG2, DREG, REG$\sigma$ and PREG1 to PREGN; a flip-flop FF; a driver DRV, a lamp LMP; the gates GT and G1 to G7.

The command tape TP, which has recorded thereon command values for the amount of feed and feedrate of the tool T etc. and auxiliary function commands such as command values for the number of revolutions of the spindle SP and so forth, is read by the tape reader TR of the numerical controller NC, and the command information read from the command tape TR is decoded by the decoder DEC. When the content of the information thus decoded is an auxiliary function command, that command is sent to the power controller PWC; for example, if the command is one setting a number of revolutions for the spindle SP, the power controller PWC applies a number-of-revolutions command to the spindle motor controller SPMC, controlling the spindle motor SPM, constituted by a DC motor or the like, to rotate at the commanded speed. In other words, the spindle motor controller SPMC controls the firing phase of a thyristor circuit for supplying current to the spindle motor SPM so that a speed detection signal FBP of the rotary encoder RE mounted on the spindle is caused to coincide with the spindle command speed signal, as is well known in the art.

When the content of the information decoded by the decoder DEC is a tool feedrate command, it is applied to the feed pulse oscillator OSC to determine the output pulse frequency of the oscillator; in a case in which decoded information content is a command value for an amount of tool feed, the command value is sent to the interpolator INT, which responds to the command information to distribute output pulses fed thereto from the feed pulse oscillator OSC via the gate GT. The distributed pulses are supplied to servo circuits SAX and SAZ, which drive the servomotors SMX and SMZ to control the movement of a movable machine part, for example, the tool T relative to the workpiece W, to achieve a desired machining of the workpiece W. Such operations are known in the art; therefore, no detailed description will herein be given.

Cutting resistance during working can be detected by various methods; but in the present apparatus shown in Figure 6 cutting resistance is detected through the voltage developed across the resistor R connected in series with the spindle motor SPM, utilizing the fact that the voltage across resistor R is proportional to the cutting resistance. The smoothing circuit SCT is provided to remove noise components contained in the voltage detected across the resistor R and comprises a low-pass filter. The smoothing circuit applies an analog output signal to A—D converter ADC. The A—D convertor ADC converts the analog output signal from the smoothing circuit SCT into digital form in synchronization with a sampling signal GSO which is output from timing pulse generator TPG upon each input thereto of a one-rotation signal RP from the rotary encoder RE. In other words, for each rotation of the spindle SP during machining a cutting resistance value is read in a digital form by the smoothing circuit SCT and the A—D converter ADC.

A current digital output signal (i.e. pertaining to cutting resistance in a current rotation of spindle SP) from the A—D converter ADC is stored in register REG1 via gate circuit G1, the arithmetic circuit ART1 and gate circuit G2 by means of the application of gate signals GS1 to GS7 to the gate circuits G1 to G7 from the timing pulse generator TPG. In the register REG2 there is stored a digital value corresponding to the cutting resistance value obtained at the preceding sampling (i.e. pertaining to cutting resistance in a last preceding rotation of the spindle SP), and on the basis of the sample values stored in the two registers REG1 and REG2, the arithmetic circuit ART1 performs the following calculation:

Content of register REG1
(current sample value)
— Content of register REG2
(preceding sample value)

and stores the calculated result in the register REG2. Then, the arithmetic circuit ART1 makes a comparison between the content of the register REG2 and the preset value $\sigma$ stored in the register REG$\sigma$ and, in accordance with the result of comparison, provides the appropriate one of the three values, 0, 1 and —1, as determined by the aforesaid equations (1), (2) and (3). The result of the comparison is set in a first stage of the register DREG via gate circuit G7. Thereafter, the arithmetic circuit ART1 performs the same operation as described above for each succeeding rotation of the spindle SP; namely, the comparison result values, 0, 1 or —1, determined in each successive rotation of the spindle, are applied to register DREG, in which the preceding values stored in the register DREG are sequentially shifted along stage by stage through DREG as each new value is added, resulting in cutting resistance change pattern of the aforementioned ternary (three value) composition being stored in the register DREG.

In the registers PREG1 to PREGN, there are prestored various kinds of standard cutting resistance change patterns assumed to appear in the case of a tool breakdown, each pattern having the ternary (three value) composition an consisting of a series of four numbers. Upon each shift of the content of the register DREG upon writing therein of a new comparison result value at its first stage, the arithmetic circuit ART2 makes a comparison between the contents of each of the registers PREG1 to PREGN, successive output in response to output timing signals GSR1 to GSRN from timing pulse generator TPG and the content of the register DREG. When the content of the register DREG and the content of any of the registers PREG1 to PREGN coincide with each other, the arithmetic circuit ART2 sets flip-flop FF to generate a tool breakdown signal, that is, an alarm signal AL.

This alarm signal AL can be utilized in various ways; in the present apparatus of Figure 6 the alarm signal AL is applied via the driver DRV to the alarm lamp LMP to light the lamp and, at the same time, the signal AL is applied to the gate circuit GT of the numerical controller NC to close the gate circuit GT, interrupting feed pulse supply to terminate feed of the tool T. Further, for rapid withdrawal of the tool T from the workpiece tool retreat program memory RET is started by the alarm signal AL to provide a tool retreat command value to the interpolator INT, thereby returning the tool T to a predetermined position, for example, a tool change point.

In the foregoing apparatus of Figure 6, the detection of cutting resistance is achieved by detecting the voltage across the resistor R connected in series with the spindle motor SPM, but apparatus embodying the present invention is not limited specifically to the above method of detecting cutting resistance and all other known detecting methods can be employed; it is also possible to detect cutting resistance, for example, by installing a strain gauge on the tool T to detect a voltage corresponding to a strain of the tool T.

As has been described above, the present invention utilizes the fact that a peculiar cutting resistance change pattern occurs when a tool breaks, and a comparison is made between a predicted standard cutting resistance change pattern occurring in the case of tool breakdown and actual cutting resistance change patterns detected at all times during working, and coincidence of patterns is regarded as indicative of tool breakdown; namely, tool breakdown can automatically be detected during working, enabling prevention of various problems which could otherwise result from tool breakdown. Accordingly, the tool breakdown detecting system provided by embodiment of this invention is of great utility when applied to a machine tool such as a numerical-controlled machine.

Thus in apparatus embodying this invention a predicted standard pattern of change in the cutting resistance experienced by a tool in the event of its breakdown is prestored in a memory and compared with actual change patterns of cutting resistance experienced by the tool during working, and in the case of coincidence of compared patterns it is decided that a tool breakdown has occurred.

## Claims

1. A method for detecting breakdown of a tool in the course of machining of a workpiece by the tool, comprising:

storing, as a standard cutting resistance change pattern, a representation of a cutting resistance change pattern occurring in the event of tool breakdown;

detecting, in the course of machining, the cutting resistance met by the tool;

forming, from the detected cutting resistance, a representation of a cutting resistance change pattern occurring in the course of machining; and

comparing the standard cutting resistance change pattern with the cutting resistance change pattern occurring in the course of machining;

coincidence of compared patterns indicating the occurrence of tool breakdown,

characterised in that said cutting resistance change pattern in the event of tool breakdown comprises first a decrease in the cutting resistance, which is greater, in absolute value, than a predetermined set value $\sigma$ immediately followed by an abrupt increase in the cutting resistance, which is greater, in absolute value, than a predetermined multiple of said predetermined set value $\sigma$.

2. A method as claimed in claim 1, in which the said standard cutting resistance change pattern is stored as a sequence of discrete values.

3. A method as claimed in claim 2, wherein the representation of the cutting resistance change pattern formed from the detected cutting resistance, is formed by:

sampling the cutting resistance detected in the course of machining;

determining the difference between each sample and the last preceding sample; and

coding the differences to provide a sequence of value representative of the cutting resistance change pattern occurring in the course of machining.

4. A method as claimed in claim 3, wherein the differences are coded by comparison with a predetermined value such that:

when a difference is greater than or equal to the negation of the predetermined value, and is less than or equal to the predetermined value, the difference is coded as "0";

when a difference is greater than a predetermined value the difference is coded as "1"; and

when a difference is less than the negation of the predetermined value the difference is coded as "—1".

5. A method of operating a tool in the course of machining of a workpiece by the tool; comprising detecting breakdown of the tool in accordance with a method as claimed in any preceding claim, and in the event of detection of a breakdown withdrawing the tool from the workpiece.

6. A method of operating a numerically-controlled machine tool, including detecting breakdown of a tool in use in the machine tool for machining a workpiece by a method as claimed in claim 1.

7. Apparatus for detecting breakdown of a tool (T) in the course of machining of a workpiece (W) by the tool (T), comprising:

a memory (PREG1 to PREGN) for storing, as a standard cutting resistance chance pattern, a representation of a cutting resistance change pattern occurring in the event of tool breakdown;

detector means (R) arranged for detecting in the course of machining, the cutting resistance met by the tool (T);

means (SCT, ADC, ART1, TRG, REG1, REG2, DREG) for forming, from the detected cutting resistance, a representation of a cutting resistance change pattern occurring in the course of machining;

comparator means (ART2) arranged for comparing the standard cutting resistance change pattern with the cutting resistance change pattern occurring in the course of machining;

means (FF) detecting coincidence of compared patterns and indicating thereby the occurrence of tool breakdown,

characterised in that said resistance change pattern in the event of tool breakdown comprises first a decrease, which is greater, in absolute value, than a predetermined set value $\sigma$, immediately followed by an abrupt increase in the cutting resistance, which is greater, in absolute value, than a predetermined multiple of said predetermined set value $\sigma$.

8. Apparatus as claimed in claim 7, in which the memory is adapted for storing, as the representation of the standard cutting resistance change pattern, a sequence of discrete values.

9. Apparatus as claimed in claim 8, wherein the means for forming the representation of the cutting resistance change pattern formed from the detected cutting resistance, comprises:

sampling means arranged for sampling the cutting resistance detected in the course of machining;

difference determination means arranged for determining the difference between each sample and the last preceding sample; and

coding means for coding the differences to provide a sequence of values representative of the cutting resistance change pattern occurring in the course of machining.

10. Apparatus as claimed in claim 9, wherein the coding means are operable to compare each difference with a predetermined value, to provide a code value "0" when a difference is greater than or equal to the negation of the predetermined value and is less than or equal to the predetermined value, to provide a code value "1" when a difference is greater than the predetermined value, and to provide a code value "−1" when a difference is less than the negation of the predetermined value.

11. Apparatus as claimed in any one of claims 7, 8, 9 or 10, including means operable to withdraw the tool from the workpiece in the event of detection of a tool breakdown.

12. Use of apparatus as claimed in any one of claims 7 to 11 for a numerically controlled machine tool.

## Revendications

1. Un procédé pour détecter la casse d'un outil au cours de l'usinage d'une pièce par l'outil, comprenant:

l'enregistrement, en tant que configuration de changement de résistance de coupe de référence, d'une représentation d'une configuration de changement de résistance de coupe qui apparaît en cas de casse de l'outil;

la détection, au cours de l'usinage, de la résistance de coupe rencontrée par l'outil;

l'établissement, à partir de la résistance de coupe détectée, d'une représentation d'une configuration de changement de résistance de coupe apparaissant au cours de l'usinage; et

la comparaison de la configuration de changement de résistance de coupe de référence avec la configuration de changement de résistance de coupe qui apparaît au cours de l'usinage;

la coïncidence des configurations comparées indiquant que l'outil s'est cassé,

caractérisé en ce que, en cas de casse de l'outil, la configuration de changement de résistance de coupe comprend tout d'abord une diminution de la résistance de coupe, qui est supérieure en valeur absolue à une valeur fixée prédéterminée $\sigma$, immédiatement suivie par une augmentation brusque de la résistance de coupe, qui est supérieure en valeur absolue à un multiple prédétermine de la valeur fixée prédéterminée $\sigma$.

2. Un procédé selon la revendication 1, dans lequel la configuration de changement de résistance de coupe de référence est enregistrée sous la forme d'une séquence de valeurs discrètes.

3. Un procédé selon la revendication 2, dans lequel la représentation de la configuration de changement de résistance de coupe établie à partir de la résistance de coupe détectée, est établie par:

l'échantillonnage de la résistance de coupe détectée au cours de l'usinage;

la détermination de la différence entre chaque échantillon et l'échantillon immédiatement précédent; et

le codage des différences pour former une séquence de valeurs représentative de la configuration de changement de résistance de coupe qui apparaît au cours de l'usinage.

4. Un procédé selon la revendication 3, dans lequel les différences sont codées par comparaison avec une valeur prédéterminée de façon que:

lorsqu'une différence est supérieure ou égale à l'opposé de la valeur prédéterminée, et est inférieure ou égale à la valeur prédéterminée, la différence soit codée par "0"; lorsqu'une différence est supérieure à une valeur prédéterminée, la différence soit codée par "1"; et

lorsqu'une différence est inférieure à l'opposé de la valeur prédéterminée, la différence soit codée par "−1".

5. Un procédé d'utilisation d'un outil au cours de l'usinage d'une pièce par l'outil, comprenant la détection de la casse de l'outil conformément à un procédé selon n'importe quelle revendication précédente, et le retrait de l'outil par rapport à la pièce en cas de détection de la casse.

6. Un procédé d'utilisation d'une machine-outil à commande numérique, comprenant la détection de la casse d'un outil utilisé dans la machine-outil pour usiner une pièce, par un procédé selon la revendication 1.

7. Dispositif pour détecter la casse d'un outil (T) au cours de l'usinage d'une pièce (W) par l'outil (T), comprenant:

une mémoire (PREG1 à PREGN) pour enregistrer, en tant que configuration de changement de résistance de coupe de référence, une représentation d'une configuration de changement de résistance de coupe qui apparaît en cas
de casse de l'outil;

des moyens détecteurs (R) conçus de façon à
détecter au cours de l'usinage la résistance de
coupe rencontrée par l'outil (T);

des moyens (SCT, ADC, ART1, TRG, REG1,
REG2, DREG) pour établir, à partir de la résistance de coupe détectée, une représentation
d'une configuration de changement de résistance de coupe qui apparaît au cours de
l'usinage;

des moyens comparateurs (ART2) conçus de
façon à comparer la configuration de changement de résistance de coupe de référence avec
la configuration de changement de résistance
de coupe qui apparaît au cours de l'usinage;

des moyens (FF) détectant la coïncidence de
configurations comparées et indiquant ainsi que
l'outil s'est cassé,

caractérisé en ce que, en cas de casse de
l'outil, la configuration de changement de résistance comprend tout d'abord une diminution,
qui est supérieure en valeur absolue à une
valeur fixée prédéterminée $\sigma$, immédiatement
suivie par une augmentation brusque de la
résistance de coupe, qui est supérieure en
valeur absolue à un multiple prédéterminé de la
valeur fixée prédéterminée $\sigma$.

8. Dispositif selon la revendication 7, dans
lequel la mémoire est conçue de façon à enregistrer une séquence de valeurs discrètes, en
tant que représentation de la configuration de
changement de résistance de coupe standard.

9. Dispositif selon la revendication 8, dans
lequel les moyens destinés à établir la représentation de la configuration de changement de
résistance de coupe à partir de la résistance de
coupe détectée comprennent:

des moyens d'échantillonnage conçus de
façon à échantilloner la résistance de coupe
détectée au cours de l'usinage;

des moyens de détermination de différence
conçus de façon à déterminer la différence entre
chaque échantillon et l'échantillon immédiatement précédent; et

des moyens de codage destinés à coder les
différences pour donner une séquence de
valeurs représentative de la configuration de
changement de résistance de coupe qui
apparaît au cours de l'usinage.

10. Dispositif selon la revendication 9, dans
lequel on peut faire fonctionner les moyens de
codage de façon à comparer chaque différence
avec une valeur prédéterminée, pour donner
une valeur de code "0" lorsqu'une différence est
supérieure ou égale à l'opposé de la valeur prédéterminée et est inférieure ou égale à la valeur
prédéterminée, pour donner une valeur de code
"1" lorsqu'une différence est supérieure à la
valeur prédéterminée, et pour donner une valeur
de code "−1" lorsqu'une différence est inférieure à l'opposé de la valeur prédéterminée.

11. Dispositif selon l'une quelconque des
revendications 7, 8, 9 ou 10, comprenant des
moyens qu'on peut faire fonctionner de façon à
reculer l'outil par rapport à la pièce en cas de
détection de la casse de l'outil.

12. Utilisation du dispositif selon l'une quelconque des revendications 7 à 11 pour une
machine-outil à commande numérique.

**Patentansprüche**

1. Verfahren zum Feststellen des Zerbrechens eines Werkzeugs im Verlauf der Bearbeitung eines Werkstücks durch das Werkzeug,
bein welchem Verfahren als normales Schneidwiderstand-Veränderungsmuster eine Darstellung
eines Schneidwiderstand-Veränderungsmusters
gespeichert wird, das im Fall des Werkzeugbruchs auftritt,

im Verlauf der Bearbeitung der von dem
Werkzeug angetroffene Schneidwiderstand ermittelt wird,

aus dem ermittelten Schneidwiderstand eine
Darstellung eines Schneidwiderstand-Veränderungsmusters gebildet wird, das im Verlauf der Bearbeitung auftritt,

und das normale Schneidwiderstand-Veränderungsmuster mit dem Schneidwiderstand-
Veränderungsmuster verglichen wird, das bei
der Bearbeitung auftritt, wobei eine Koinzidenz
verglichener Muster das Auftreten eines Werkzeugbruchs anzeigt, dadurch gekennzeichnet,
daß das Schneidwiderstand-Veränderungsmuster im Fall eines Werkzeugbruchs zuerst
eine Abnahme des Schneidwiderstands umfaßt,
welche als absoluter Wert größer ist als ein vor-
bestimmter Einstellwert $\sigma$, unmittelbar gefolgt
von einem abrupten Anstieg des Schneidwiderstands, welcher als absoluter Wert größer ist
als ein vorbestimmtes Vielfaches des vor-
bestimmten Einstellwertes $\sigma$.

2. Verfahren nach Anspruch 1, dadurch ge-
kennzeichnet, daß das normale Schneidwider-
stand-Veränderungsmuster als Folge diskreter
Werte gespeichert wird.

3. Verfahren nach Anspruch 2, dadurch gekennzeichnet, daß die Darstellung des aus dem
ermittelten Schneidwiderstand gebildeten
Schneidwiderstand-Veränderungsmusters gebildet wird durch

Abtasten des im Verlauf der Bearbeitung ermittelten Schneidwiderstandes,

Bestimmen der Differenz zwischen jedem
Abtastwert und dem letzten vorangehenden
Abtastwert, sowie

Kodieren der Differenzen, um eine Folge von
Werten zu schaffen, die für das Schneidwiderstand-Veränderungsmuster repräsentativ sind,
welches im Verlauf der Bearbeitung auftritt.

4. Verfahren nach Anspruch 3, dadurch
gekennzeichnet, daß die Differenzen durch Vergleich mit einem vorbestimmten Wert in der Art
kodiert werden, daß eine Differenz als "0" kodiert wird, wenn sie größer oder gleich der Negation des vorbestimmten Wertes ist und
kleiner oder gleich dem vorbestimmten Wert ist,
daß eine Differenz als "1" kodiert wird, wenn sie größer als ein vorbestimmter Wert ist, und daß die Differenz als "−1" kodiert wird, wenn sie kleiner ist als die Negation des vorbestimmten Wertes.

5. Verfahren zum Betätigen eines Werkzeugs im Verlauf der Bearbeitung eines Werkstücks durch das Werkzeug, dadurch gekennzeichnet, daß das Zerbrechen des Werkzeugs gemäß dem Verfahren nach einem der vorhergehenden Ansprüche festgestellt wird, und daß im Fall der Feststellung eines Zerbrechens das Werkzeug von dem Werkstück zurückgezogen wird.

6. Verfahren zum Betreiben einer numerisch gesteuerten Werkzeugmaschine, dadurch gekennzeichnet, daß es die Feststellung des Zerbrechens eines Werkzeugs bei Verwendung in der Werkzeugmaschine zur Bearbeitung eines Werkstücks gemäß dem Verfahren nach Anspruch 1 umfaßt.

7. Gerät zum Feststellen des Zerbrechens eines Werkzeugs (T) im Verlauf der Bearbeitung eines Werkstücks (W) durch das Werkzeug (T), mit einem Speicher (PREG1 bis PREGN) zum Speichern einer Darstellung eines Schneidwiderstand-Veränderungsmusters, das im Fall eines Werkzeugbruchs auftritt, als normales Schneidwiderstand-Veränderungsmuster, ferner einer Detektoreinrichtung (R), die zur Ermittlung des von dem Werkzeug (T) angetroffenen Schneidwiderstandes im Verlauf der Bearbeitung ausgelegt ist, Einrichtungen (SCT, ADC, ART1, TRG, REG1, REG2, DREG) zum Bilden einer repräsentativen Darstellung eines Schneidwiderstand-Veränderungsmusters, das im Verlauf der Bearbeitung auftritt, aus dem ermittelten Schneidwiderstand, einer Komparatoreinrichtung (ART2), die ausgelegt ist zum Vergleichen des normalen Schneidwiderstand-Veränderungsmusters mit dem Schneidwiderstand-Veränderungsmuster, das im Verlauf der Bearbeitung auftritt, sowie einer Einrichtung (FF), welche die Koinzidenz verglichener Muster ermittelt und dadurch das Auftreten eines Werkzeugbruchs anzeigt, dadurch gekennzeichnet, daß das Schneidwiderstand-Veränderungsmuster im Fall eines Werkzeugbruchs zuerst eine Abnahme unfaßt, die als absoluter Wert größer ist als ein vorbestimmter Einstellwert σ, unmittelbar gefolgt von einem abrupten Anstieg des Schneidwiderstands, welcher als absoluter Wert größer ist als ein vorbestimmtes Vielfaches des vorbestimmten Einstellwertes σ.

8. Gerät nach Anspruch 7, dadurch gekennzeichnet, daß der Speicher darauf eingerichtet ist, als Darstellung des normalen Schneidwiderstand-Veränderungsmusters eine Folge diskreter Werte zu speichern.

9. Gerät nach Anspruch 8, dadurch gekennzeichnet, daß die Einrichtungen zum Bilden der repräsentativen Darstellung des aus dem ermittelten Schneidwiderstand gebildeten Schneidwiderstand-Veränderungsmusters umfassen:

eine Abtasteinrichtung, die zum Abtasten des im Verlauf der Bearbeitung ermittelten Schneidwiderstandes vorgesehen ist,

eine Differenzbestimmungseinrichtung, die zum Bestimmen der Differenz zwischen jedem Abtastwert und dem letzten vorangehenden Abtastwert vorgesehen ist, sowie

eine Kodiereinrichtung zum Kodieren der Differenzen, um eine Folge von Werten zu schaffen, die für das Schneidwiderstand-Veränderungsmuster repräsentativ sind, welches im Verlauf der Bearbeitung auftritt.

10. Gerät nach Anspruch 9, dadurch gekennzeichnet, daß die Kodiereinrichtung zum Vergleichen jeder Differenz mit einem vorbestimmten Wert operiert, um einen Kodewert "0" zu bilden, wenn eine Differenz größer oder gleich der Negation des vorbestimmten Wertes und kleiner oder gleich dem vorbestimmten Wert ist, um einen Kodewert "1" zu bilden, wenn eine Differenz größer als der vorbestimmte Wert ist, und einen Kodewert "−1" zu bilden, wenn eine Differenz kleiner als die Negation des vorbestimmten Wertes ist.

11. Gerät nach einem der Ansprüche 7, 8, 9 oder 10, gekennzeichnet durch eine Einrichtung, die die Funktion hat, das Werkzeug im Fall der Feststellung eines Werkzeugbruchs von dem Werkstück zurückzuziehen.

12. Verwendung des Gerätes nach einem der Ansprüche 7 bis 11 für eine numerisch gesteuerte Werkzeugmaschine.

# FIG. 1

W1

CT1

# FIG. 2

CUTTING RESISTANCE

TIME

# FIG. 3

W2

P

CT2

# FIG. 4

CUTTING RESISTANCE

TIME

# FIG. 5

CUTTING RESISTANCE

$+\delta$

$-\delta$

TIME

sp

0 0 0 0 -1 1 1 1 0 0 0 0 0

1

FIG. 6